# EUROPEAN PATENT SPECIFICATION

(11) **EP 4 361 743 B1**
(45) Date of publication and mention of the grant of the patent: **31.12.2025**
(21) Application number: 22204419.0
(22) Date of filing: 28.10.2022
(51) Int. Cl.: G05B 19/4065

(54) **COMPUTER IMPLEMENTED METHOD OF OPERATING A TOOLING MACHINE AND TOOLING MACHINE**
COMPUTERIMPLEMENTIERTES VERFAHREN ZUM BETRIEB EINER WERKZEUGMASCHINE UND WERKZEUGMASCHINE
PROCÉDÉ MIS EN OEUVRE PAR ORDINATEUR DE FONCTIONNEMENT D'UNE MACHINE D'USINAGE ET MACHINE D'USINAGE

(43) Date of publication of application: 01.05.2024
(73) Proprietor: Deere & Company, Moline, IL 61265 (US)
(72) Inventor: BALLESTER, Hector, 68163 Mannheim (DE); MARTIN UGENA, Marcos, 68163 Mannheim (DE); GARCIA, Sergio, 68163 Mannheim (DE); GALAN, Cesar, 68163 Mannheim (DE)
(74) Representative: Reichert, Christian

(56) References cited:
- DAVID L G ET AL: "Tool Wear Monitoring Using Improved Dragonfly Optimization Algorithm and Deep Belief Network", APPLIED SCIENCES (SPECIAL ISSUE ADVANCE IN DIGITAL SIGNAL, IMAGE AND VIDEO PROCESSING), vol. 12, no. 16, 8130, 14 August 2022 (2022-08-14), XP002808836, DOI: 10.3390/app12168130
- KURADA S ET AL: "A review of machine vision sensors for tool condition monitoring", COMPUTERS IN INDUSTRY, ELSEVIER, AMSTERDAM, NL, vol. 34, no. 1, 1 October 1997 (1997-10-01), pages 55 - 72, XP004097811, ISSN: 0166-3615, DOI: 10.1016/S0166-3615(96)00075-9

## Description

### Field of the Disclosure

The invention relates to a computer implemented method of operating a tooling machine and, more particularly, to predicting remaining useful life of a work tool using machine-learned computing model.

### Background of the Disclosure

Generally, manufacturing process involves transformation of a work piece from one state of completion to a more advanced state. Further, it's an operation that changes the geometry, property, or appearance of the work piece. There are various types of work tools used to perform various manufacturing operations such as cutting, drilling, milling, knurling, grinding etc. These various tools are used for machining the number of work pieces multiple times, hence there is wear and tear and may breakage of tool in certain scenarios. The wear and tear of tools or abrupt breakage situations may damage the workpiece and/or a machine or may be hazardous to an operator. Hence, calculating or predicting the remaining useful life of the work tool is very important aspect in the manufacturing process. Also, such inventions are well known in the prior art.

For example, US9508042B2 discloses method for predicting machining quality of a machine tool. In this method, each product accuracy item is correlated with operation paths of the machine tool. During a modeling stage, the machine tool is operated to process work piece samples, and sample sensing data of the work piece samples associated with the operation paths are collected during the operation of the machine tool. The sample sensing data of each work piece sample is de-noised and converted into the sample feature data corresponding to each feature type. The work piece samples are measured with respect to the product accuracy item and integrated into the feature data for building a predictive model, thereby obtaining quality predicted data for each product accuracy item. During a usage stage, accuracy item values of a work piece are predicted using the feature data during processing the work piece in accordance with the predictive models.

As mentioned above, the conventional virtual metrology system builds the prediction model corresponding to the single work piece quality. Each prediction model is used to predict one work piece quality only. Moreover, the prediction models corresponding to different work piece qualities are modified individually. Hence, this is a slow and lengthy process.

In another prior art, US8781982B1 disclose mechanisms for predicting a remaining useful life of a cutter head of a milling machine using a neural network model containing extracted features from conditioned data. The operational data may be vibration data, acoustic data, and acceleration data.

Further prior art is known from DAVID LG ET AL describing "Tool Wear Monitoring Using Improved Dragonfly Optimization Algorithm and Deep Belief Network" (INSPEC, THE INSTITUTION OF ELECTRICAL ENGINEERS, STEVENAGE, GB, 4 August 2022 (2022-08-14), XP002808836) and also KURADA, S et. al. describing "A review of machine vision sensors for tool condition monitoring" (COMPUTERS IN INDUSTRY, ELSEVIER, AMSTERDAM, NL, vol. 34, no. 1, 1 October 1997 (1997-10-01), pages 55-72, XP004097811, ISSN: 0166-3615, DOI: 10.1016/ S0166-3615(96)00075-9).

However, above mentioned methods are time consuming, costly and difficult to apply in real time mass production with variety of tools and work pieces. Also, a complex manufacturing process demands a quick and cost sensitive solution for monitoring work tool and work piece quality, respectively. Conventional, known manufacturing methods are often impractical to address it.

Therefore, the objective of the invention is to provide quick, cost sensitive and accurate method which overcomes one or more the above-mentioned problem.

### Summary of the Disclosure

The object will be achieved by the teaching of the claim 1, wherein further advantageous solutions are defined by the meaning of the respective sub claims.

Accordingly, a computer implemented method of operating a tooling machine is provided. The method comprises a provision of a work tool, a work piece and an image capturing device. Further, the method comprises starting a tooling process by engaging the work tool with the work piece. A basic image of a surface of the work piece is captured by the image capturing device. The image capturing device transmits the basic image to a processing unit of a computer. Furthermore, creating an optimized image, wherein creating the optimized image comprises processing the basic image by using an image optimization algorithm via the processing unit. The basic image optimization algorithm is a local binary pattern (LBP) algorithm.

Moreover, creating a histogram data of the optimized image and using a histogram data as one or more indicators. The one or more indicators of the histogram data comprise values representing gray values or blocks of gray values of the optimized image. The one or more indicators are utilized as an input data for a machine-learned computing model. The machine-learned computing model may comprise linear regression algorithms or neural network systems which have been trained by a respective training process/program which utilizes said input data for training purpose and teaching in correlation with physically measured or determined correlation data, for example surface roughness, surface slope, lifetime of work tool, other image data, vibration data, work piece quality data or other real or physically measure data which may indicate or are in corelation with the quality of a work tool or a remaining useful lifetime of the work tool, respectively. As mentioned above, for training purpose, the machine-learned computing model has passed through a training period, wherein a discrete block of gray values of multiple histogram data or different blocks of gray values of multiple histogram data have been inputted to the machine-learned computing model and wherein the respective outputs of the machine-learned computing model have been corelated with above mentioned physically measured or determined correlation data/values. Furthermore, in addition or instead of blocks of gray values also discrete gray values can be utilized as input data, in both the machine-learned computing model or for the training process/program.

Moreover, the output data of the machine-learned computing model is used for providing an indication for a need of a replacement of the work tool.

### Brief Description of the Drawings

Fig. 1 shows a block diagram of tooling machine having work tool, work piece and computer,
Fig. 2 shows a scheme of an image optimization algorithm,
Fig. 3 shows a block diagram of image processing steps,
Fig. 4 shows examples of gray value data in correlation with surface quality data,
Fig. 5 shows training data and a learn curve for a machine-learned model
Fig. 6 shows a flow diagram of a tooling process.

### Detailed Description

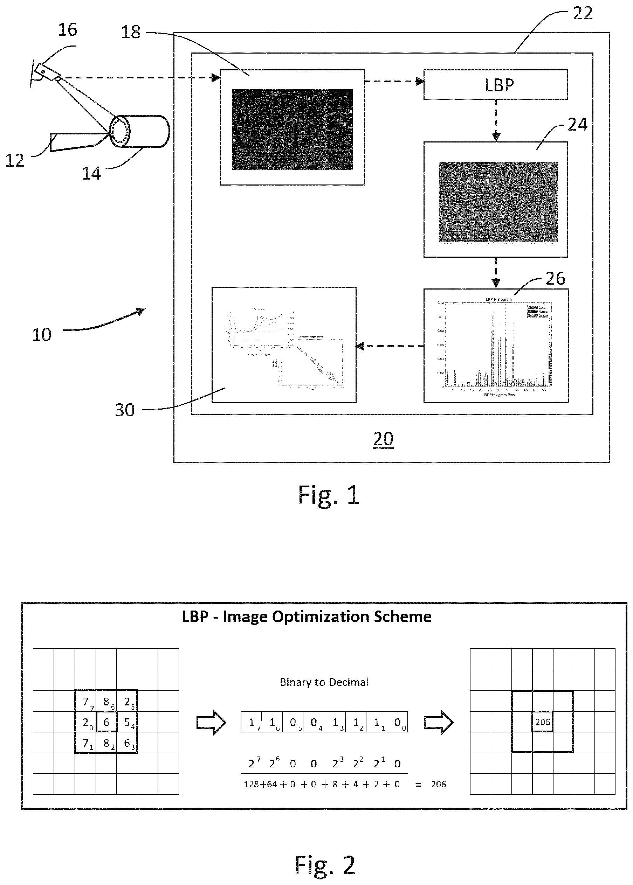

Referring now to Fig. 1, a tooling machine 10 is shown schematically, comprising a work tool 12 and a work piece 14. Also, an image capturing device 16 is configured to capture a basic image 18 of the work piece 14. The image capturing device 16 may be a digital camera, laser sensor, optical sensor, 3D camera, thermal imaging camera, or any other image capturing device. The image capturing device 16 is connected to a computer 20. Further, the computer 20 comprises a processing unit 22. The connection of the image capturing device 16 to the computer 20 and/or a transmission of the basic image to the processing unit, respectively, may be wired or wireless. The wired connections can be provided by a controller area network (CAN) bus, by ethernet, by USB cables or any other wiring media or cables which can be used to transfer image data from the image capturing device. Wireless connections may be provided by WiFi, Bluetooth, near field communication, cellular communication or any other wireless media which can be used to transfer image data wireless from the image capturing device.

As shown in Fig. 1, the image capturing device 16 transmits the basic image 18 to the processing unit 22 of the computer 20. Further, an optimized image 24 is created by processing the basic image 18. Said processing of the basic image 18 is performed by using an image optimization algorithm via the processing unit 22. The basic image optimization algorithm used in here is a local binary pattern (LBP) uniform algorithm, which is shown schematically in Figure 2.

Said LBP algorithm is used for denoising and eliminating disturbances and interferences, e.g. interfering light conditions, from an picture. The result of LBP algorithm processing will be standardized, representative and comparable images, cleaned out from noise and interference. A histogram analysis applied to such optimized images allows a quantitative comparison of image data with discrete histogram values. The scheme of said LBP algorithm is shown in Fig. 2, and can be applied as follows: Each image pixel has an image pixel value, e.g. a gray value. Then each image pixel value will be converted to an optimized image pixel value, by use of a binary pattern. The binary pattern uses information of the neighbor pixels of the image pixel value to be converted, wherein each image pixel value to be converted has up to 8 neighbor pixel values. The binary pattern considers a limit of pixel value of 255, based on a binary number with 8 digits, wherein the 1st digit has a multiplicator of 128, the 2nd of 64, the3rd of 32,... the 6^{th} of 4, the 7^{th} of 2 and the 8^{th} of 1. Further, the algorithm considers to give each neighbor pixel the value of "1", if the respective value is higher or equal than the pixel value to be converted, and will give the respective neighbor pixel the value of "0" if the pixel value is lower than the pixel value to be converted. Then, beginning with a matrix neighbor pixel of upper left side of the pixel value to be converted, and then in clockwise rotation around the respective pixel value to be converted, the respective values will be multiplied with the digit multiplicators. Summing up the respective products of new value and respective digit multiplicator will result in a new pixel value for the respective pixel value to be converted. For the example, as shown in Fig. 2, the pixel value to be converted is "6", with the 8 neighbors of e.g. 7, 8, 2, 5, 6, 8, 7, 2 (beginning upper left and then clockwise rotation). The comparison with the value "6" results in new pixel values (1 or 0) for the respective neighbors, e.g. 1, 1, 0, 0, 1, 1, 1, 0. Multiplicating each new pixel value of the neighbors with its respective digit multiplicator and summing up all the resulting products will result in a value of "206". This procedure will be done for all image pixels, resulting in a new optimized and denoised image. Said optimized image will be further analysed with obtaining a histogram of new "optimized" image pixel values, which can then be further used for quantitative comparison. The local binary pattern (LBP) uniform algorithm is mentioned here as an example and other optimization algorithms as grasshopper, or any digital filters or any such algorithms for denoising the interference of various factors can also be used and are well known in the prior art related to the field of image processing.

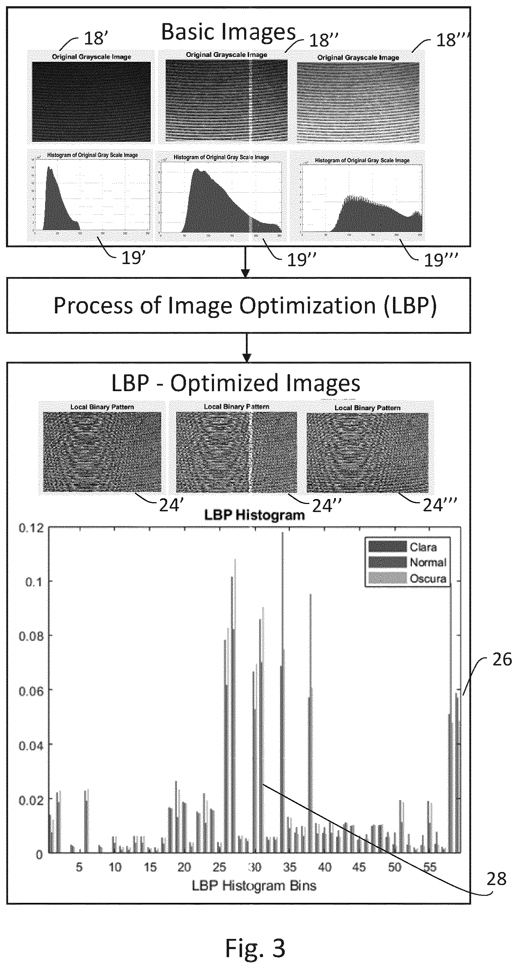

The effect of said image optimization with LBP algorithm is shown as example in Fig. 3, where basic images 18', 18", 18‴ (original, captured images) are shown in the upper row of pictures in Fig. 3, showing a basic image 18' with low brightness (dark/left side position), a basic image 18" with normal brightness (normal/middle position) and a basic image with high brightness 18‴ (bright/right side position). The differences in their brightness may result from ununiform lightning or light circumstances, in other words from interfering light conditions when capturing the images with the capturing device 16. For each basic image, a corresponding gray value histogram 19', 19", 19‴, provided by image processing without image optimization, is shown in the row below the respective basic images 18', 18", 18‴. As can be seen, the differences of gray value distribution are remarkable, as the histogram 19' of the dark basic image 18' shows an accumulation of gray values in a lower range of gray values, the histogram 19" of the normal basic image 18" shows an accumulation of gray values in a middle range of gray values and the histogram 19‴of the bright basic image 18‴ shows most gray values in a higher range gray values. Considering that the basic images 18', 18", 18‴ are all representing images of a work piece 14 with similar surface conditions/qualities, it appears difficult, if not impossible, to take any common conclusion out of the histogram values with respect to the respective similar surface conditions/qualities. The different brightness values or, respectively, the different distributions of gray values in the histograms 19', 19", 19‴ are the result of interfering light conditions when capturing the image with the image capturing device 16. Therefore, for making histogram values usable for representative surface condition/quality evaluations, those interfering light conditions need to be eliminated, in order to be able to obtain comparable and representative image/histogram data, when analysing the images. Therefore, to eliminate said interfering and unfavorable light conditions, the basic images 18 are undergoing the image optimization process as described above (see Fig. 2). With that, optimized images 24 (24', 24", 24"') are obtained for further processing (see Fig. 3 images in lower row), in particular for providing a basis for representative histogram data, as shown with the gray value histogram 26 resulting from processing the optimized images 24', 24", 24‴, and which is shown below the same. The shown histogram 26 contains as example gray value information of all three optimized images 24', 24", 24‴, wherein for each image 24', 24", 24‴ the scale of 255 gray values has been divided and scaled into 59 blocks of gray values and wherein the respective blocks of each image are shown together in said one histogram 26 for all the three images 24', 24", 24‴ (each block of 1 to 59 contains peaks of gray values of each image 24', 24", 24"'). As can be seen, all the three optimized images 24', 24", 24‴ have now similar gray values, which indicates that the interferences and noises as discussed above could be eliminated to the most extend. With that, the histogram data of the optimized images 24', 24", 24‴ can be used to find/detect characteristic tooling quality values, in particular discrete gray values or blocks of gray values representing quantitative indicators 28 for the quality of the work tool 12 and the surface of the work piece 14, respectively, all finally obtained from image processing of the mentioned basic images 18', 18", 18‴. Those indicators 28 can now be correlated with quality data obtained from measurements with test work pieces, regarding their surface condition, slope or roughness or from other measurements/testings representing and evaluating the quality of the work tool 12 and/or the work piece 14.

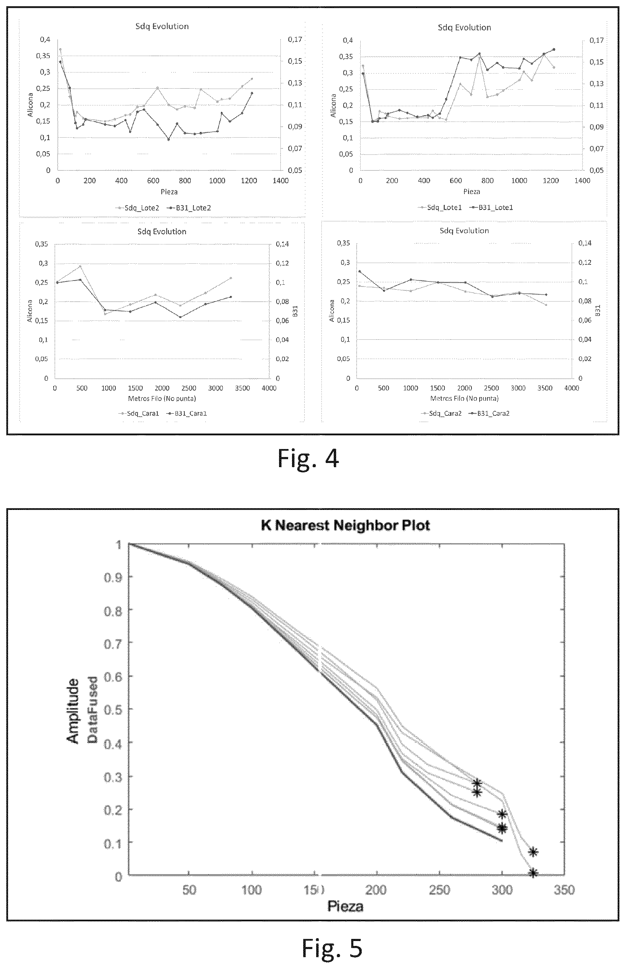

In Fig. 4, an example of the mentioned correlation is shown. As such, it could be discovered that one or more discrete blocks of gray values (e.g. block 31) of the optimized images 24', 24", 24‴ show high rates of correlation with image value data received from optical surface measurements on a respective work piece 14. Similar corresponding correlations could be found when using discrete blocks of gray values with other real or physically measured quality data from work pieces 14 as mentioned above. As such, and as shown as example in Fig. 4, block 31 of the histogram 26 has been identified as one of the indicators 28 and scaled together with optical measurement data of multiple test work pieces 14, obtained from a surface quality analysis of the mentioned multiple test work pieces. The curves shown in Fig. 4, demonstrate that the gray values obtained from an image processing model as discussed above and described in Fig. 3, correlate to a high degree with real measured quality data (in the graphs labeled as "Alicona") obtained from optical surface quality analysis of the test work pieces 14.

In a further step, and in order to develop a computer implemented method of operating a tooling machine, or in other words, to build an automated computer controlled tooling machine monitoring process, the one or more indicators 28 are utilized as an input data for a machine-learned computing model 30, as further shown in Fig. 1. The machine-learned model 30 is implemented in the process unit 20. Machine-learning computer models are based on computer controlled machine learning algorithms (e.g. based on linear regression) which are known in the art and do need separate explanation. Before deploying a machine-learned computing model, said model has to be trained by providing input data and assign said input data to a given output data. In doing this, the model will learn based on its algorithm to assign a certain input data to a respective given output data.

That said, before effectively applying such machine-learned computing model 30 for tooling machine monitoring, the machine-learned computing model 30 had to undergo a training period, in which discrete blocks of gray values (e.g. said block 31) of multiple histogram data or also different blocks of gray values of multiple histogram data have been inputted to the machine-learned computing model 30. Said input values have been assigned to respective given outputs of the machine-learned computing model 28, based on above mentioned correlation values which indicate the quality of the work tool 12, in particular the remaining useful life for the work tool12. As more input values are assigned to respective given output values, as more precise the model learns to assign input data to a certain output.

As shown in Fig. 5, multiple test runs (in total 6) with different work tools have been made for training purpose, wherein for each test run (with different work tools 12 and with 250 up to 350 work pieces 14 for each of the work tools 12) an input of gray value has been given for each of the work pieces 14 which have been tooled and said gray value has been assigned to a particular quality value for the work tool 12 (e.g. derived by quality measures of the work pieces 14). As can be seen with the upper 6 lines of the graph in Fig. 5, the quality value of a respective work tool (y-axis) as well as the gray value amplitudes (also y-axis) are decreasing from work piece 14 to work piece 14 over the life time of the work tool 12 (x-axis). The result of the training period with said test runs was a learning curve of the machined-learned model (bottom curve), with which the machine-learned model can provide a certain quality value for the work tool 12, e.g. a defined remaining useful life value (RUL), in response to a given input, e.g. a gray value 28 from image processing histogram 26. With that, a machine-learned model 30 has been build up and a stable output data of work piece quality data and/or of a related work tool quality data and/or a related remining useful life (RUL) for the work tool 12 can be given online during a tooling process. Furthermore, with utilizing said output data of the machine-learned computing model 30, an indication for a need of a replacement of the work tool 12 can be provided online and or a stopping of the tooling process can be initiated, e.g. for the purpose of replacing the work tool 12. The indication may include popping a message on a display of the computer 20 showing the need of a replacement of the work tool 12 and/or giving an alarm or a warning signal. Said indication for the need of replacement of the work tool 12 might be provided when the output provided by the machine-learned model 30 is below a certain user defined target value or threshold.

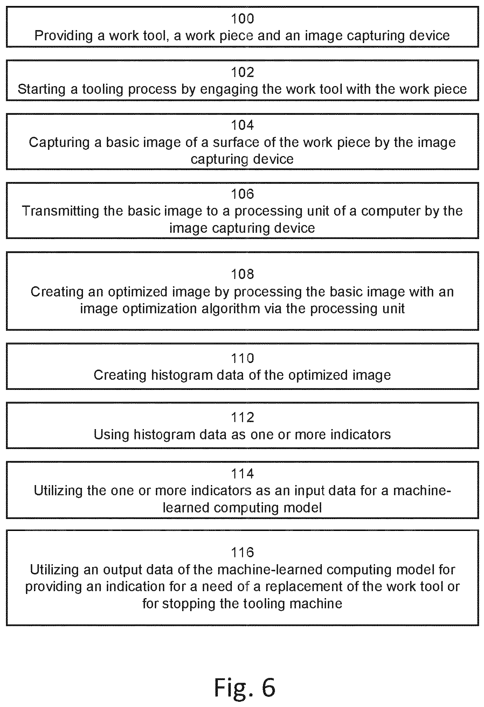

As such and as shown in Fig. 6 a possible tooling process using the proposed method can be defined as follows:
At block 100, the work tool 12, the work piece 14 and the image capturing device 16 is provided.
At block 102, the tooling process is started and the work tool 12 is brought into engagement with the work piece14.
At block 104, the image capturing device 16 captures the basic image 18 of a surface of the work piece 14.
At block 106, the image capturing device 16 transmits the basic image 18 to a processing unit 22 of a computer 20.
At block 108, an optimized image 24 is created by processing the basic image 18. The processing of the basic image 18 is performed by using an image optimization algorithm via the processing unit 22. The basic image optimization algorithm is a local binary pattern (LBP) uniform algorithm.
At block 110, a histogram data 26 of the optimized image 24 is created.
At block 112, the histogram data 26 of the optimized image 24 is used as one or more indicators 28.
At block 114, the one or more indicators 28 are utilized as input data for a machine-learned computing model 30.
At block 116, an output data of the machine-learned computing model 30 is utilized for providing an indication for a need of a replacement of the work tool 12 or for stopping the tooling machine.

## Claims

1. A computer implemented method of operating a tooling machine, the method comprising:
(100) providing a work tool (12) and a work piece (14);
(100) providing an image capturing device (16);
(102) starting a tooling process and engaging the work tool (12) with the work piece (14);
(104) capturing a basic image (18) of a surface of the work piece (14) by the image capturing device (16);
(106) the image capturing device (16) transmitting the basic image (18) to a processing unit (22) of a computer (20);
(108) the processing unit (22) creating an optimized image (24), wherein creating the optimized image (24) comprises processing the basic image (18) by using an image optimization algorithm via the processing unit (22);
wherein the image optimization algorithm comprises a local binary pattern (LBP) algorithm;
(110) creating a histogram (26) of the optimized image (24);
(112) using data of the histogram (26) as one or more indicators (28),
wherein the one or more indicators (28) of the histogram data (26) comprise values representing gray values or blocks of gray values of the optimized image (24);
(114) utilizing the one or more indicators (28) as an input data for a machine-learned model (30);
(116) utilizing an output data of the machine-learned model (30) for providing an indication for a need of a replacement of the work tool (10) or for stopping the tooling machine.

2. The method according to claim 1, further comprising a step of training process/program for teaching the machine-learning model (30).

3. The method according to claim 2, wherein the step of training process/program comprising using input data from a histogram (26) of an optimized image (24) and quality data obtained from measured surfaces of a work piece (14).

4. Tooling machine (10) for tooling a work piece with a work tool, comprising:
a work tool (12) and a work piece (14);
an image capturing device (16);
a computer (20) with a processing unit (22), wherein the processing unit includes a machine-learned model,
**characterized in that** the tooling machine is configured to be operable with a computer implemented method according to one of the claims 1 to 3.

## Patentansprüche

1. Computerimplementiertes Verfahren zum Betreiben einer Werkzeugbearbeitungsmaschine, wobei das Verfahren Folgendes umfasst:
(100) Bereitstellen eines Arbeitswerkzeugs (12) und eines Werkstücks (14);
(100) Bereitstellen einer Bilderfassungsvorrichtung (16);
(102) Starten eines Werkzeugbearbeitungsprozesses und Ineingriffbringen des Arbeitswerkzeugs (12) mit dem Werkstück (14);
(104) Erfassen eines Basisbildes (18) einer Oberfläche des Werkstücks (14) durch die Bilderfassungsvorrichtung (16);
(106) Übertragen des Basisbildes (18) durch die Bilderfassungsvorrichtung (16) an eine Verarbeitungseinheit (22) eines Computers (20);
(108) Erzeugen eines optimierten Bildes (24) durch die Verarbeitungseinheit (22), wobei das Erzeugen des optimierten Bildes (24) Verarbeiten des Basisbildes (18) unter Verwendung eines Bildoptimierungsalgorithmus über die Verarbeitungseinheit (22) umfasst;
wobei der Bildoptimierungsalgorithmus einen Local-Binary-Pattern(LBP)-Algorithmus umfasst;
(110) Erzeugen eines Histogramms (26) des optimierten Bildes (24);
(112) Verwenden von Daten des Histogramms (26) als einen oder mehrere Anzeiger (28),
wobei der eine oder die mehreren Anzeiger (28) der Histogrammdaten (26) Werte umfassen, die Grauwerte oder Blöcke von Grauwerten des optimierten Bildes (24) repräsentieren;
(114) Verwenden des einen oder der mehreren Anzeiger (28) als Eingabedaten für ein maschinell erlerntes Modell (30);
(116) Verwenden von Ausgabedaten des maschinell erlernten Modells (30) zum Bereitstellen einer Anzeige für eine Notwendigkeit eines Austauschs des Arbeitswerkzeugs (10) oder zum Anhalten der Werkzeugbearbeitungsmaschine.

2. Verfahren nach Anspruch 1, das ferner einen Schritt eines Trainingsprozesses/-programms zum Anlernen des maschinellen Lernmodells (30) umfasst.

3. Verfahren nach Anspruch 2, wobei der Schritt eines Trainingsprozesses/-programms Verwenden von Eingabedaten aus einem Histogramm (26) eines optimierten Bildes (24) und Qualitätsdaten, die von gemessenen Oberflächen eines Werkstücks (14) erhalten werden, umfasst.

4. Werkzeugbearbeitungsmaschine (10) zur Werkzeugbearbeitung eines Werkstücks mit einem Arbeitswerkzeug, umfassend:
ein Arbeitswerkzeug (12) und ein Werkstück (14);
eine Bilderfassungsvorrichtung (16);
einen Computer (20) mit einer Verarbeitungseinheit (22), wobei die Verarbeitungseinheit ein maschinell erlerntes Modell beinhaltet,
**dadurch gekennzeichnet, dass** die Werkzeugbearbeitungsmaschine dazu ausgelegt ist, mit einem computerimplementierten Verfahren nach einem der Ansprüche 1 bis 3 betreibbar zu sein.

## Revendications

1. Procédé, mis en œuvre par ordinateur, pour le fonctionnement d'une machine d'usinage, le procédé comprenant :
(100) la fourniture d'un outil de travail (12) et d'une pièce à usiner (14) ;
(100) la fourniture d'un dispositif de capture d'images (16) ;
(102) le démarrage d'un processus d'usinage et la mise en contact de l'outil de travail (12) avec la pièce à usiner (14) ;
(104) la capture d'une image de base (18) d'une surface de la pièce à usiner (14) par le dispositif de capture d'images (16) ;
(106) la transmission, par le dispositif de capture d'images (16), de l'image de base (18) à une unité de traitement (22) d'un ordinateur (20) ;
(108) la création, par l'unité de traitement (22), d'une image optimisée (24), la création de l'image optimisée (24) comprenant le traitement de l'image de base (18) à l'aide d'un algorithme d'optimisation d'images via l'unité de traitement (22) ;
l'algorithme d'optimisation d'images comprenant un algorithme de motifs binaires locaux (LBP) ;
(110) la création d'un histogramme (26) de l'image optimisée (24) ;
(112) l'utilisation de données de l'histogramme (26) comme un ou plusieurs indicateurs (28),
le ou les indicateurs (28) des données de l'histogramme (26) comprenant des valeurs représentant des valeurs de gris ou des blocs de valeurs de gris de l'image optimisée (24) ;
(114) l'utilisation du ou des indicateurs (28) comme données d'entrée pour un modèle appris par apprentissage automatique (30) ;
(116) l'utilisation de données de sortie du modèle appris par apprentissage automatique (30) pour fournir une indication de la nécessité de remplacer l'outil de travail (10) ou pour arrêter la machine d'usinage.

2. Procédé selon la revendication 1, comprenant en outre une étape de processus/programme d'entraînement destinée à former le modèle appris par apprentissage automatique (30).

3. Procédé selon la revendication 2, dans lequel l'étape de processus/programme d'entraînement comprend l'utilisation de données d'entrée provenant d'un histogramme (26) d'une image optimisée (24) et de données de qualité obtenues à partir de surfaces mesurées d'une pièce à usiner (14).

4. Machine d'usinage (10) pour l'usinage d'une pièce à usiner à l'aide d'un outil de travail, comprenant :
un outil de travail (12) et une pièce à usiner (14) ;
un dispositif de capture d'images (16) ;
un ordinateur (20) doté d'une unité de traitement (22), l'unité de traitement comportant un modèle appris par apprentissage automatique,
la machine d'usinage étant **caractérisée en ce qu'**elle est configurée pour pouvoir fonctionner au moyen d'un procédé mis en œuvre par ordinateur selon l'une des revendications 1 à 3.
